# EUROPÄISCHE PATENTANMELDUNG

(11) **EP 0 535 453 A1**
(43) Veröffentlichungstag der Anmeldung: **07.04.1993**
(21) Anmeldenummer: 92115883.8
(22) Anmeldetag: 17.09.1992
(51) Int. Cl.: F16L 37/28

(54) **Gassteckdose**

(30) Priorität: 01.10.1991 DE 9112208 U
(71) Anmelder: Metallwerke Gebr. Seppelfricke GmbH & Co., D-45881 Gelsenkirchen (DE)
(72) Erfinder: Seppelfricke, Otto, Dipl.-Ing., W-4650 Gelsenkirchen (DE); Kolbe, Eduard, W-4650 Gelsenkirchen (DE); Haense, Karl-Heinz, W-4370 Marl (DE)
(74) Vertreter: Hosbach, Hans Ulrich

(57) **Zusammenfassung**

Die Gassteckdose hat an einem Ende (6) ihres zylinderförmigen Gehäuses (1) eine stirnseitige Öffnung (2) zum Einstecken eines Gasanschlußschlauchsteckers und einen rechtwinklig vom Gehäuse (1) abstehenden Stutzen (3) zum Verschrauben der Gassteckdose mit einer Gasleitung. Zur Eignung für eine Unterputzinstallation ist die Gassteckdose an dem Stutzen (3) mit einem Außengewinde für eine zu der Rohrnennweite der Gasleitung passende Überwurfmutterverschraubung (9) ausgebildet und ist das Gehäuse (1) herausnehmbar in einem Unterputzinstallationskasten (4) angeordnet, wobei das die stirnseitige Öffnung (2) aufweisende Ende (6) des Gehäuses (1) in einer Öffnung eines vorderseitigen abnehmbaren Deckels (5) des Kastens (4) liegt. Der Kasten (4) enthält in einer Seitenwand eine Tülle (7), deren aus dem Kasten herausragendes Ende (8) mit der Gasleitung verbindbar ist und deren in den Kasten hineinragendes Ende die an den Stutzen (3) des Gehäuses (1) anschließbare Überwurfmutterverschraubung (9) enthält. In dem Kasten (4) sind Stützrippen (10) angeordnet, die das Gehäuse (1) gegen Verdrehen um die Längsachse des Stutzens (3) abstützen.

## Beschreibung

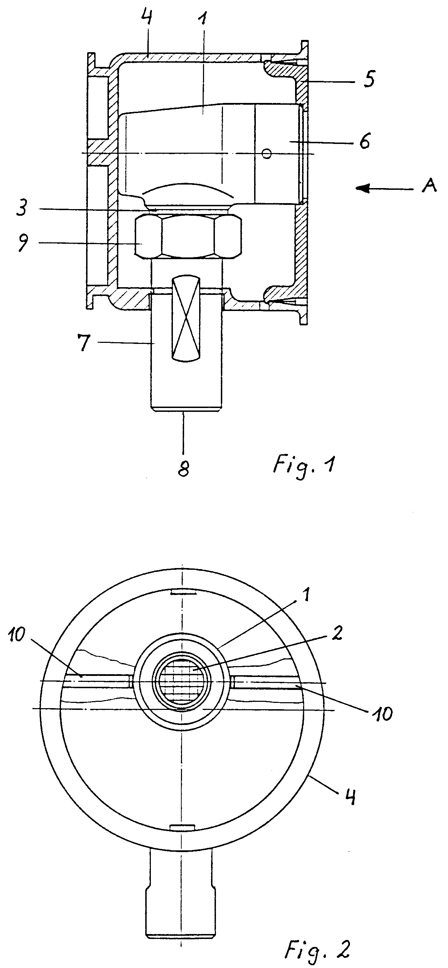

Die Erfindung betrifft eine Gassteckdose nach dem Oberbegriff des Hauptanspruchs. Die zum Anschließen eines Gasgerätes mit einem Schlauch und einem Schlauchstecker gebräuchlichen, beispielsweise aus der DE-PS 35 19 933 bekannten Gassteckdosen werden vor einer Gebäudewand installiert, wozu die Gassteckdosen an ihrem Gehäusestutzen ein Außengewinde haben, welches zu einer Einschraubmuffe mit der Rohrnennweite der üblichen Gasleitungen paßt und mit dem die Gassteckdose durch Herumdrehen um die Längsachse des Gehäusestutzens in die Einschraubmuffe der in der Wand bzw. unter Putz verlegten Gasleitung eingeschraubt wird. In der Praxis ist insbesondere für moderne Kücheneinrichtungen der Wunsch entstanden, daß der Steckeranschluß für Gasgeräte nicht frei vor der Gebäudewand liegt und unter Umständen sogar störend über die Wandoberfläche vorsteht, sondern ebenso in der Gebäudewand liegt und mit deren Oberfläche bündig abschließt wie die Steckeranschlüsse für Elektrogeräte.
Die Erfindung hat zur Aufgabe, eine Gassteckdose zu schaffen, die unter Beibehaltung der bewährten Konstruktion und winkligen Gehäuseform zum Beispiel nach Art der DE-PS 35 19 933 für die Unterputzinstallation geeignet und verwendbar ist. Diese Aufgabe löst die Erfindung durch die Ausbildung der Gassteckdose mit den im Kennzeichnungsteil des Hauptanspruchs aufgeführten Merkmalen. Eine Installation der konventionellen Gassteckdose in einer Unterputzdose ist nicht möglich, weil bei der hierbei parallel zur Wandoberfläche liegenden Längsachse des Gehäusestutzens der Gassteckdose und der in die Untersputzdose einmündenden Einschraubmuffe der Gasleitung die konventionelle Gassteckdose nicht in der Unterputzdose um die Längsachse ihres Gehäusestutzens gedreht werden kann. Dieses Problem beseitigt die erfindungsgemäße Gassteckdose. Die durch eine Seitenwand des Kastens geführte Tülle kann zum Beispiel mit einer auf der Außenseite des Kastens liegenden üblichen Schraubmuffenverbindung oder auch Lötverbindung während der Rohrverlegung mit der noch nicht verputzten Gasleitung dicht und fest verbunden werden. In den fertig verputzten Kasten kann das Gassteckdosengehäuse bequem von vorn her in den Kasten eingeführt und durch die im Kasten liegende Überwurfmutterverschraubung dicht mit der Tülle verbunden werden, wobei die Überwurfmutter sich mühelos mit einem Schraubenschlüssel in dem Kasten verdrehen läßt und hierbei das Gassteckdosengehäuse durch die Stützrippen des Kastens gegen Verdrehen festgehalten wird. Für das Anschließen eines zu einem Gasgerät führenden Verbindungsschlauches wird dann zweckmäßigerweise der Verbindungsschlauch mit einem Winkelstecker ausgebildet.
In der Zeichnung ist ein Ausführungsbeispiel der erfindungsgemäßen Gassteckdose dargestellt. Es zeigt
Figur 1 einen Schnitt durch die Gassteckdose,
Figur 2 eine Ansicht der Gassteckdose in Richtung des Pfeiles A in Figur 1.

Die Gassteckdose enthält ein zylinderförmiges Gehäuse 1, welches an einem Ende eine stirnseitige Öffnung 2 zum Einführen eines Schlauchanschlußsteckers aufweist und in dem sich die konventionelle verdrehbare Einrichtung zum Betätigen eines Absperrorgans und zum Verriegeln des Schlauchanschlußsteckers gegen Herausziehen aus dem Gehäuse befindet. Nahe dem anderen Ende besitzt das Steckdosengehäuse 1 einen rechtwinklig zur Gehäuselängsachse stehenden Gehäusestutzen 3. Dieser Gehäusestutzen 3 ist nicht mit einem zur Nennweite der Gasrohrleitung passenden Außengewinde versehen, um in eine Einschraubmuffe der Gasrohrleitung eingeschraubt werden zu können, sondern ist mit einem im Durchmesser größeren Außengewinde ausgebildet, welches zu einer für die Nennweite der Gasrohrleitung genormten Überwurfmutterverschraubung paßt. Das Gassteckdosengehäuse 1 ist herausnehmbar in einem Kasten 4 angeordnet, der für die Unterputzinstallation bestimmt ist und an seiner in der Wandoberfläche liegenden offenen Seite einen abnehmbaren Deckel 5 besitzt. Dieser Deckel 5 besitzt eine Öffnung, in der das die Einstecköffnung 2 enthaltende Gassteckdosenende 6 liegt. Der Kasten 4 enthält bei eckiger Ausführung in einer Seitenwand oder bei runder Ausbildung an einer Stelle der Umfangswand eine Tülle 7, deren aus dem Kasten 4 herausragendes Ende 8 in beliebiger Weise, zum Beispiel durch Verschrauben oder Verlöten, mit einer in der Gebäudewand unter Putz verlegten Gasleitung dicht und fest verbunden werden kann. Das in den Kasten 4 hineinragende Ende der Tülle 7 enthält die Überwurfmutterverschraubung 9, an die das Steckdosengehäuse 1, nach dem Einführen in den Kasten 4 bei abgenommenem Deckel 5, mit dem Gehäusestutzen 3 angeschlossen werden kann. Die Dichtheit der Überwurfmutterverschraubung kann zum Beispiel dadurch gewährleistet werden, daß die Tülle 7 an ihrem mit dem Steckdosengehäuse zu verbindenden Ende einen Dichtungskonus mit O-Ring aufweist, der in den innenseitig passend ausgebildeten Gehäusestutzen 3 einsteckbar ist. Damit sich das Steckdosengehäuse 1 beim Betätigen der Überwurfmutterverschraubung 9 mit einem Werkzeug nicht um die Längsachse des Gehäusestutzens 3 verdreht, ist der Kasten 4 innen mit Stützrippen 10 ausgebildet, zwischen die das Steckdosengehäuse 1 beim Einsetzen in den Kasten 4 paßt und die das Steckdosengehäuse 1 gegen Verdrehen um die Längsachse des Gehäusestutzens 3 festhalten. Sollte ein Auswechseln der Gassteckdose erforderlich sein, kann bequem nach Abnehmen des Kastendeckels 5 die Überwurfmutterverschraubung 9 gelöst und danach das Steckdosengehäuse nach vorn aus dem Kasten 4 herausgenommen werden.

## Patentansprüche

1. Gassteckdose mit einem zylinderförmigen Gehäuse (1), welches an einem Ende (6) eine stirnseitige Öffnung (2) aufweist, in die ein im Gehäuse zum Betätigen eines Absperrorgans verdrehbarer und gegen Herausziehen aus dem Gehäuse verriegelbarer Stecker eines Gasanschlußschlauches einführbar ist, und welches einen rechtwinklig zur Gehäuselängsachse stehenden Gehäusestutzen (3) für die Verschraubung der Gassteckdose mit einer Gasleitung aufweist, dadurch gekennzeichnet, daß das Steckdosengehäuse (1) an seinem Gehäusestutzen (3) mit einem Außengewinde für eine zur Rohrnennweite der Gasleitung passende Überwurfmutterverschraubung (9) ausgebildet ist, daß das Steckdosengehäuse (1) herausnehmbar in einem für die Unterputzinstallation bestimmten Kasten (4) angeordnet ist, wobei das die stirnseitige Öffnung (2) aufweisende Ende (6) des Steckdosengehäuses in einer Öffnung eines vorderseitigen abnehmbaren Deckels (5) des Kastens (4) liegt, daß ferner der Kasten (4) in einer Seitenwand eine Tülle (7) enthält, deren aus dem Kasten herausragendes Ende (8) mit der Gasleitung verbindbar ist und deren in den Kasten hineinragendes Ende die an den Gehäusestutzen (3) des Steckdosengehäuses (1) anschließbare Überwurfmutterverschraubung (9) enthält, und daß in dem Kasten (4) Stützrippen (10) angeordnet sind, die das Steckdosengehäuse (1) gegen Verdrehen um die Längsachse des Gehäusestutzens (3) abstützen.
